# EUROPÄISCHE PATENTANMELDUNG

(11) **EP 1 839 744 A1**
(43) Veröffentlichungstag der Anmeldung: **03.10.2007**
(21) Anmeldenummer: 07006308.6
(22) Anmeldetag: 27.03.2007
(51) Int. Cl.: B01J 23/52, B01J 23/56, B01J 25/00

(54) **Goldhaltiger Katalysator mit poröser Struktur**

(30) Priorität: 27.03.2006 DE 102006014067
(71) Anmelder: Universität Bremen, 28359 Bremen (DE); LAWRENCE LIVERMORE NATIONAL LABORATORY, Livermore CA 94550-9698 (US)
(72) Erfinder: Bäumer, Marcus, 28357 Bremen (DE); Schulz, Christian, 28201 Bremen (DE); Jürgens, Birte, 28865 Lilienthal (DE)
(74) Vertreter: Müller Fottner Steinecke

(57) **Zusammenfassung**

Die Erfindung betrifft einen goldhaltigen Katalysator mit poröser Struktur, der erhältlich ist durch ein Verfahren, das die folgenden Schritte umfasst: gemeinsames Schmelzen von Gold und wenigstens einem weniger edlen Metall, das ausgewählt ist aus der Gruppe bestehend aus Silber, Kupfer, Rhodium, Palladium und Platin, und zumindest teilweises Herauslösen des mindestens einen weniger edlen Metalls aus der so erhaltenen Ausgangslegierung. Der erfindungsgemäße Katalysator weist eine hohe Aktivität und große Langzeitstabilität auf, und dies trotz der Tatsache, dass er kein Trägermaterial enthält bzw. keine Verbindung enthält, die als Trägermaterial dient. Der erfindungsgemäße Katalysator ist verwendbar zur Beschleunigung und/oder Beeinflussung der Produktselektivität von Oxidations- und Reduktionsreaktionen. Der erfindungsgemäße Katalysator ist beispielsweise geeignet zur Oxidation von Kohlenmonoxid zu Kohlendioxid, was ihn u. a. einsetzbar macht in einer Brennstoffzelle, insbesondere einer Polymer-Elektrolyt-Membran-Brennstoffzellen (PEM), zum Schutz des Anodenkatalysators gegen eine Blockierung durch Kohlenmonoxid.

## Beschreibung

Die vorliegende Erfindung betrifft einen goldhaltigen Katalysator mit poröser Struktur, die Verwendung des erfindungsgemäßen Katalysators zur Beschleunigung und/oder Beeinflussung der Produktselektivität von Oxidations- und Reduktionsreaktionen, sowie eine Brennstoffzelle mit einem erfindungsgemäßen Katalysator.

Die Wirkung von Katalysatoren beruht bekanntermaßen darauf, dass sie chemischen Reaktionen einen Weg eröffnen, auf dem Ausgangsverbindungen bzw. -stoffe unter Aufbringung einer geringeren Aktivierungsenergie in Endprodukte umgewandelt werden können. Jedoch beschleunigen Katalysatoren auf diese Weise nicht nur eine chemische Reaktion, sondern können häufig auch das Ziel der Reaktion beeinflussen. Katalysatoren besitzen daher eine immense Bedeutung auf allen Gebieten, bei denen eine beschleunigte bzw. gezielte chemische Umsetzung von Edukten wünschenswert oder erforderlich ist.

Katalysatoren auf Goldbasis sind erst seit einigen Jahren bekannt. Sie eignen sich sowohl für Oxidations- wie auch für Reduktionsreaktionen, wobei der Schwerpunkt der Forschungen und Anwendungsgebiete wohl auf dem Gebiet der Oxidationsreaktionen liegt. In diesem Bereich sind beispielsweise goldhaltige Katalysatoren zur Oxidation von Ethylen und Essigsäure zu Vinylacetat oder die teilweise oder selektive Oxidation von Kohlenwasserstoffen bekannt. Die wohl bekannteste Anwendung für Katalysatoren auf Goldbasis dürfte jedoch die Oxidation von Kohlenmonoxid zu Kohlendioxid sein. Diese Reaktion dient oftmals nicht nur als Modell für die Untersuchung der Aktivität und Eigenschaften von Katalysatoren auf Goldbasis, derartige Katalysatoren gehören zu den wenigen Systemen, bei denen diese Umsetzung bereits bei Raumtemperatur in nennenswertem Umfang erfolgen kann.

Im Bereich der Reduktionsreaktionen ist der Einsatz von Katalysatoren auf Goldbasis beispielsweise bei der Hydrierung von Kohlenmonoxid, Kohlendioxid und Acetylen beschrieben worden. Des Weiteren sind Goldkatalysatoren in Form von geträgerten Goldteilchen auch für Anwendungen in der Reduktion von Stickoxiden sowie für Hydrierungsreaktionen von Alkenen oder ungesättigten Aldehyden mit sehr positiven Resultaten untersucht worden. (Masatake Haruta, CatTech, 2002, 6, 102-115; Masatake Haruta, Cat. Today, 1997, 36, 153-166.)

Es ist weiter bekannt, dass Gold als das edelste Metall nur unter gewissen Voraussetzungen katalytische Wirkung zeigen kann. Eine dieser Voraussetzungen ist beispielsweise, dass das Gold in sehr kleinen (Nano)Teilchen vorliegen muss. Derartige sehr kleine Goldteilchen weisen jedoch eine große Oberflächenenergie auf und neigen daher dazu, rasch zu koagulieren, wodurch sich ihre katalytische Aktivität stark vermindert.

Aus diesem Grunde wurde vorgeschlagen, Gold(teilchen) auf einem Trägermaterial, insbesondere einem Übergangsmetalloxid, zu immobilisieren. Es ist eine Reihe von Verfahren zum Herstellen von derartigen katalytisch aktiven, goldhaltigen Systemen bekannt, die darauf abzielen, beispielsweise durch die Verwendung neuer Trägermaterialien oder durch die Anwendung neuer Verfahren zum Herstellen der Gold- und/oder Trägermaterialteilchen die für katalytische Systeme wichtigen Kenngrößen, wie beispielsweise die Selektivität, die für den Ablauf katalytischer Reaktionen notwendigen Reaktionsbedingungen (wie Druck und Temperatur), erzielbare Umsetzungsgeschwindigkeiten sowie die Langzeitstabilität positiv zu beeinflussen.

So wurde etwa in DE 4238640 A1 vorgeschlagen, das Metalloxid mit immobilisiertem Gold im Wege einer Mischfällung herzustellen, wobei sich dann aber ein Teil des Goldes wirkungslos im Inneren der resultierenden Teilchen befindet.

Um diesen Nachteil zu umgehen wurde wiederholt vorgeschlagen, das Gold auf bereits bestehende poröse Trägerteilchen zu beaufschlagen. So lehrt beispielsweise WO 00/64581, zuerst ein Teilchen aus Titan-Silizium-Mischoxid im Wege eines Sol-Gel-Verfahrens herzustellen und anschließend das Gold im Wege bekannter Verfahren, wie beispielsweise Abscheidungsausfällung, Imprägnieren, Sputtern, chemische Dampfphasenabscheidung (CVD) oder physikalische Dampfphasenabscheidung (PVD) darauf abzuscheiden.

Wenn Gold in gelöster Form (z. B. als AuCl₃) verwendet wird, um es beispielsweise durch Imprägnieren auf der Oberfläche von Trägerteilchen abzuscheiden, wie dies u. a. in WO 03/106021 vorgeschlagen wird, ist es erforderlich, die Goldkationen durch eine zusätzlichen Reduktionsreaktion in die metallische Form überzuführen.

Bei nasschemischen Verfahren wird von Problemen in Bezug auf die Reproduzierbarkeit der chemischen/physikalischen Eigenschaften der erhaltenen katalytischen Systeme berichtet. Diese Schwierigkeiten sollen beispielsweise darauf beruhen, dass es u. a. schwierig ist, die Größe der Goldteilchen zu steuern, dass die Katalysatoren durch Ionen wie beispielsweise Chlorid vergiftet sind, dass unterschiedliche Mengen des Goldes in den Poren der Trägermaterialien "verloren gehen" und dass durch notwendige thermische Nachbehandlungsschritte die katalytische Aktivität des Materials in nicht reproduzierbarer Weise verändert wird.

Aus diesem Grunde wird z. B. in WO 2005/03082 vorgeschlagen, das Gold im Wege einer PVD auf Trägermaterialteilchen abzuscheiden. Für das PVD-Verfahren wird eine geeignete Vakuumapparatur benötigt, was das Verfahren apparativ aufwändig macht und auch Beschränkungen in Bezug auf die Größe und Form des verwendbaren Trägermaterials mit sich bringt.

WO 03/059507 beschreibt goldhaltige katalytische Materialien, die hergestellt werden, indem Gold und ein weniger edleres Metall zusammen geschmolzen werden und anschließend das weniger edle Metall aus dem erhaltenen Material durch chemische oder elektrochemische Behandlung zumindest teilweise entfernt wird. Als weniger edle Metalle werden die Metalle der Gruppen IIB (Zn, Cd, Hg) und IIIA (B, Al, Ga, In, Tl) vorgeschlagen. Des Weiteren wird vorgeschlagen, als Promotor zusätzlich ein Metall aus einer der Gruppen IVB, VB, VIB, VIII, IB, IIB, IIIA, IVA, sowie Magnesium und Cer vorzusehen. Auch in WO 03/059507 wird davon ausgegangen, dass der fertige Katalysator ein Trägermaterial auf Basis eines Metalloxids aufweisen muss, da nur so ein rasches Agglomerieren und Sintern des goldhaltigen Materials verhindert werden könne.

Aus dieser kurzen Übersicht über bekannte Verfahren zur Herstellung von goldhaltigen Katalysatoren wird deutlich, dass jeweils mehrere komplizierte und/oder aufwändige Schritte erforderlich sind, bis ein auch in der Technik verwendbarer goldhaltiger Katalysator erhalten wird.

Es ist daher eine der Aufgaben der vorliegenden Erfindung, einen goldhaltigen Katalysator bereitzustellen, bei dem die aus dem Stand der Technik bekannten Nachteile verringert sind. Eine weitere Aufgabe der vorliegenden Erfindung ist es, vorteilhafte Anwendungen für den erfindungsgemäßen Katalysator bereitzustellen.

Diese Aufgaben werden gelöst durch den Katalysator gemäß Anspruch 1, die Verwendung des erfindungsgemäßen Katalysators gemäß Anspruch 15 sowie durch die Brennstoffzelle gemäß Anspruch 18. Vorteilhafte Ausgestaltungen der vorliegenden Erfindung sind Gegenstand der Unteransprüche.

Der erfindungsgemäße goldhaltige Katalysator mit (nano)poröser Struktur ist dadurch gekennzeichnet, dass er erhältlich ist durch ein Verfahren, das die folgenden Schritte umfasst: gemeinsames Schmelzen von Gold und wenigstens einem weniger edlen Metall, das ausgewählt ist aus der Gruppe bestehend aus Silber, Kupfer, Rhodium, Palladium und Platin, und zumindest teilweises Herauslösen des mindestens einen weniger edlen Metalls aus der so erhaltenen Ausgangslegierung. Der Schritt des zumindest teilweisen Herauslösens des mindestens einen weniger edlen Metalls aus der Ausgangslegierung wird im nachfolgenden "Entlegierungsverfahren" genannt.

Gemäß einer bevorzugten Ausführungsform wird die Ausgangslegierung für den erfindungsgemäßen Katalysator durch gemeinsames Schmelzen von Gold und wenigstens einem weniger edlen Metall hergestellt, das ausgewählt ist aus der Gruppe bestehend aus Silber, Kupfer und Palladium.

Gemäß einer weiteren bevorzugten Ausführungsform wird die Ausgangslegierung für den erfindungsgemäßen Katalysator durch gemeinsames Schmelzen von Gold und einem der weniger edlen Metalle Silber, Kupfer, Rhodium, Palladium und Platin hergestellt (binäres System).

Der erfindungsgemäße Katalysator zeichnet sich überraschender Weise durch eine hohe Aktivität und große Langzeitstabilität aus, und dies trotz der Tatsache, dass er kein Trägermaterial enthält bzw. keine Verbindung (z. B. ein Übergangsmetalloxid) enthält, die als Trägermaterial dient. Dies ist umso überraschender, als sämtlicher vorbekannte Stand der Technik davon ausgegangen ist, dass ein solches Trägermaterial zwingend notwendig ist, um eine ausreichende katalytische Aktivität und Stabilität eines auf Gold basierenden Katalysators zu erzielen.

Die Herstellung einer goldhaltigen Ausgangslegierung ist dem Fachmann bekannt und kann beispielsweise durch einfaches Zusammengeben der Metalle in einem gewünschten Mengenverhältnis und anschließendes Schmelzen der Metalle in einem Ofen, gegebenenfalls unter einer Schutzgasatmosphäre, erfolgen.

Für den erfindungsgemäßen Katalysator eignen sich bevorzugt Ausgangslegierungen, bei denen das Verhältnis von Gold zu dem/den weniger edlen Metall(en) im Bereich von etwa 50 Atom% : 50 Atom% bis 10 Atom% : 90 Atom% liegt.

Dabei ist es von Vorteil, wenn die Ausgangslegierung eine homogene einphasige,Legierung ist oder doch zu einem Teil aus einer solchen Legierung besteht.

So bildet beispielsweise Gold als binäres System mit Silber, Kupfer oder Palladium keine Mischungslücke aus, wodurch die Herstellung von homogenen einphasigen Legierungen ermöglicht wird. Homogene einphasige Legierungen sind darüber hinaus auch bei verschiedenen Mischungsverhältnissen von Gold und mehr als einem der hier erfindungsgemäß verwendeten weniger edlen Metalle herstellbar.

Im Bereich homogener einphasiger Legierungen, wie sie beispielsweise bei den binären Systemen aus Gold und einem der Metalle Silber, Kupfer oder Palladium gebildet werden, kann durch einfaches Verändern der mengenmäßigen Zusammensetzung in vorteilhafter Weise auch die Dichte und Porosität des späteren (nano)porösen Materials auf einfache Weise eingestellt werden. Ein solches Vorgehen ist auch bei den Systemen aus Gold und mehr als einem der erfindungsgemäß verwendeten weniger edlen Metalle möglich, sofern und soweit das jeweilige Mischungsverhältnis der Ausgangslegierung eine homogene einphasige Legierung bildet.

Durch zumindest teilweises Herauslösen (Entlegieren) des wenigstens einen weniger edlen Metalls aus der erfindungsgemäßen Ausgangslegierung ist es möglich, homogene, monolithische, (nano)poröse Materialien herzustellen, die ohne jedes Trägermaterial stabil und über einen langen Zeitraum katalytisch aktiv sind.

Derartige homogene, monolithische, nanoporöse Materialien weisen auch eine hohe spezifische Oberfläche auf, was für katalytische Anwendungen von großem Vorteil ist.

Im Falle einer Gold-Silber-Ausgangslegierung (Au-Ag-Ausgangslegierung) kann die Zusammensetzung im Bereich von etwa 20 - 45 Atom% Gold liegen, d. h. bei einem Verhältnis von Gold zu Silber im Bereich von etwa 45 Atom% : 55 Atom% bis 20 Atom% : 80 Atom%. Bei einer Au-Ag-Ausgangslegierung führen höhere Au-Konzentrationen zur Ausbildung einer Passivierungsschicht und niedrigere Au-Konzentrationen nicht zu einem monolithischen (nano)porösen Metallkörper. Die möglichen Konzentrationsgrenzen können für jeden Legierungstyp von einem Fachmann leicht bestimmt werden. Für die weiter unten beschriebenen beispielhaften Messungen zur katalytischen Aktivität wurde eine Au-Ag-Ausgangslegierung mit etwa 30 Atom% Au verwendet.

Innerhalb der jeweils möglichen Konzentrationsgrenzen können weitere Optimierungen vorgenommen werden. Was in jedem Einzelfall als optimal angesehen wird, kann unterschiedlich sein; so kann beispielsweise eine Optimierung eine möglichst hohe Aktivität, möglichst lange Standzeiten oder auch möglichst geringe Kosten zum Ziel haben.

Nach der Herstellung der Ausgangslegierung ist es vorteilhaft, wenn die Ausgangslegierung homogenisiert wird. Dies wird erreicht, indem die Ausgangslegierung eine ausreichende Zeit bei einer Temperatur nahe unterhalb des Schmelzpunktes gehalten wird.

Es ist einer der besonderen Vorteile des erfindungsgemäßen Katalysators, dass seine Herstellung von einer Ausgangslegierung ausgeht. Die erhaltene Ausgangslegierung kann vor dem Entlegierungsverfahren nahezu beliebig geformt werden und es ist so praktisch jede gewünschte Form erhältlich. Durch die weiter unten beschriebenen Entlegierungsverfahren verändert sich die äußere Form der Ausgangslegierung nicht, so dass durch die Formgebung der Ausgangslegierung bereits die Form des späteren Katalysators vorgegeben werden kann.

Zur Formgebung der Ausgangslegierung kann jedes geeignete Verfahren verwendet werden, wie beispielsweise Pressen, Stanzen, Walzen, Biegen, Bohren, (Aus)Hämmern, Schneiden und/oder Fräsen. Da diese Verfahren technisch in aller Regel nicht besonders aufwändig sind (es wird beispielsweise keine Vakuumkammer benötigt), können einfach und kostengünstig praktisch jede gewünschte Größe und Form des erfindungsgemäßen Katalysators hergestellt werden.

Die geformte Ausgangslegierung wird in bevorzugter Weise vor dem Entlegierungsverfahren ausgeglüht, um mechanische Spannungen abzubauen, beispielsweise für 24 Stunden bei 850 °C.

Die Ausgangslegierung kann aber beispielsweise auch mit Hilfe eines Gießverfahrens in eine gewünschte Form oder in eine für eine weitere Bearbeitung oder Formgebung vorteilhafte Form gebracht werden. Wenn die Formgebung des erfindungsgemäßen Katalysators ausschließlich mit Hilfe eines Gießverfahrens erfolgt, wird in vorteilhafter Weise die erhaltene Ausgangslegierung lediglich homogenisiert.

Das zumindest teilweise Entlegieren und Erzeugen der porösen Struktur erfolgt dann in einem nächsten Schritt in bevorzugter Weise durch Verwendung wenigstens eines elektrochemischen und/oder nasschemischen Verfahrens. Welches Verfahren oder welche Kombination von verschiedenen Verfahren jeweils das/die geeignetste ist, hängt unter anderem von der Zusammensetzung der Legierung und/oder dem vorgesehenen Einsatzzweck des resultierenden Katalysators ab. Gegebenenfalls kann das geeignetste Verfahren bzw. die geeignetste Kombination von einem Fachmann durch einige wenige Versuche ermittelt werden.

Bei Einsatz eines elektrochemischen Verfahrens kann die teilweise oder vollständige Entlegierung des weniger edlen Metalls aus der Ausgangslegierung und das Ausmaß der Entlegierung (d. h. wie viel des weniger edlen Metalls befindet sich noch bzw. verbleibt in der Ausgangslegierung) sehr genau über die Einstellung der Spannung oder der Stromdichte des elektrischen Verfahrens kontrolliert und gesteuert werden.

Beispielsweise kann aus Au-Ag-Ausgangslegierungen der Silberanteil im gewünschten Ausmaß herausgelöst werden, indem die Proben mit Hilfe einer vergoldeten Klemme fixiert und zum Beispiel in eine Lösung mit 1 M HNO₃ und 0,01 M AgNO₃ gegeben werden. Die beschriebene Lösung eignet sich für eine Silber-Pseudo-Referenzelektrode, darf aber nicht für Silber/Silberchlorid-Referenzelektroden verwendet werden. In diesem Fall bestünde die Gefahr der Kontamination der Lösung mit Chloridionen. Um die Ausgangslegierung vom Silber zu befreien, wird die Spannung oberhalb des kritischen Potentials angelegt. Der Entlegierungsvorgang ist abgeschlossen, wenn der elektrische Strom in den Bereich weniger Mikroampere fällt. Anschließend wird die Probe üblicherweise mehrmals mit Wasser gewaschen und anschließend an der Luft getrocknet. Der Restanteil des wenigstens einen weniger edlen Metalls kann gegebenenfalls über den insgesamt geflossenen Strom oder die Bedingungen am Ende der Elektrolyse kontrolliert werden.

Eine zumindest teilweise Entlegierung unter Verwendung eines nasschemischen Verfahrens erfolgt unter Verwendung einer Lösung, die so zusammengesetzt ist, dass sie eine Lösung des weniger edlen Metalls aus der Ausgangslegierung bewirkt. Die Zusammensetzung der Lösung orientiert sich dabei an der Anforderung, das/die weniger edle(n) Metall(e) lösen zu können ohne jedoch das Gold in der Ausgangslegierung in nennenswerter Weise anzugreifen.

Ein Beispiel einer derartigen Lösung zur zumindest teilweisen Entlegierung einer Au-Ag-Ausgangslegierung mit 30 Atom% Gold besteht aus einer Lösung aus 70%-iger Salpetersäure. Mit einer derartigen Lösung können beispielsweise 300 µm dicke Proben innerhalb von ein bis drei Tagen bei Raumtemperatur (teilweise) entlegiert werden. Durch die Salpetersäure wird zumindest der größte Teil des Silberanteils selektiv aus Proben herausgelöst und es bleiben nanoporöse Goldschäume zurück. Die Säure wird durch mehrmaliges Waschen der Proben mit Wasser entfernt, danach können die Proben an Luft getrocknet werden.

Der Anteil des oder der weniger edlen Metall(e) kann durch die Prozessführung während des Entlegierungsverfahrens gezielt auf den gewünschten Rest reduziert werden, wobei dieser restliche Anteil im Rahmen der Erfindung einen beliebigen Wert einnehmen kann, beispielsweise etwa 5 Atom%, etwa 4 Atom%, etwa 3 Atom%, etwa 2 Atom%, etwa 1 Atom%, < 1 Atom%, <0,5 Atom%, <0,1 Atom% oder gar 0 Atom%.

Das Material weist nach der teilweisen oder vollständigen Entlegierung zum Beispiel ein Verhältnis von Gold zu dem wenigstens einen weniger edlen Metall im Bereich von 100 Atom% : 0 Atom% bis etwa 95 Atom% : 5 Atom% auf. Diese Angaben beruhen auf Ergebnissen von Analysen mittels Atom-Absorptions-Spektroskopie (AAS), mit der die Gesamtzusammensetzung des Materials bestimmt werden kann.

Bei beispielhaft durchgeführten Analysen mittels XPS (XPS = X-Ray Photoelectron Spectroscopy - röntgenangeregte Photoelektronenspektroskopie) wurden Verhältnisse von Gold zu dem wenigstens einen weniger edlen Metall in den gleichen Materialien im Bereich von etwa von 100 Atom% : 0 Atom% (Anfangswert) bis etwa 80 Atom% : 20 Atom% (Endwert) gemessen, wobei der Anfangswert des Bereichs bei gleichem Endwert beispielsweise auch 99,9 Atom% : 0,1 Atom%, 99,5 Atom% : 0,5 Atom%, 99,0 Atom% : 1,0 Atom%, 98,0 Atom% : 2,0 Atom%, 97,0 Atom% : 3,0 Atom%, 96,0 Atom% : 4 Atom% und 95,0 Atom% : 5,0 Atom% betragen kann. Der erfindungsgemäße Katalysator ist jedoch nicht auf diese lediglich beispielhaft gemessenen Wertebereiche beschränkt.

Soweit die im Vergleich zur AAS mittels XPS ermittelten Werte einen höheren Anteil für das wenigstens eine weniger edle Metall ergeben haben, beruht dies auf dem Umstand, dass XPS eine stark oberflächensensitive Messmethode ist. Es ist Fachleuten gut bekannt, dass sich in Legierungen ein oder mehrere Metalle an der Oberfläche relativ zum Volumen anreichern können.

Der optimale Anteil des weniger edlen Metalls, der für den jeweils gewünschten Anwendungszweck in dem porösen goldhaltigen Katalysator verbleiben soll, kann von einem Fachmann durch Versuche einfach ermittelt werden. Wie bereits oben in Bezug auf das Mischungsverhältnis der Metalle für die Ausgangslegierung erläutert, besteht auch in Bezug auf den Restmetallgehalt des weniger edlen Metalls die Möglichkeit, dass die Frage, was als optimal angesehen wird, für jeden Anwendungsfall unterschiedlich beantwortet werden kann; auch hier kann beispielsweise eine Optimierung eine möglichst hohe Aktivität, möglichst lange Standzeiten, ein optimales Maß an Porosität, oder auch möglichst geringe Kosten zum Ziel haben.

Damit der erfindungsgemäße Katalysator seine volle katalytische Aktivität entfaltet, wird er vorteilhafter Weise bei einer mäßig erhöhten Temperatur (z. B. im Bereich von etwa +40 bis +80 °C) in einer sauerstoffhaltigen Atmosphäre, die gegebenenfalls einen gewissen Anteil an CO enthält, aktiviert. In der Regel genügt eine einmalige derartige Aktivierung. Eine Anwesenheit von Kohlenmonoxid ist insoweit von Vorteil, als durch sie der Verlauf der Aktivierung verfolgt werden kann (nach erfolgter Aktivierung ist Oxidation von Kohlenmonoxid zu Kohlendioxid nachweisbar bzw. erhöht). Über den Mechanismus der Aktivierung sind bislang keine näheren Erkenntnisse verfügbar.

Eine mögliche Erklärung für diese Aktivierung könnte sein, dass Wasser welches sich in den Poren des Schaums befindet, durch die erhöhte Temperatur entfernt wird. Weiterhin wäre es möglich, dass organische Verbindungen, wie beispielsweise Kohlenwasserstoffe, die die Oberfläche blockieren, ebenfalls durch die erhöhte Temperatur entfernt werden. Auch ist es denkbar, dass durch die bei der Aktivierung gewählten Bedingungen eine Segregation eines Metalls zur Oberfläche erfolgt.

Wie Untersuchungen ergeben haben, weisen vorteilhafte Ausgestaltungen des erfindungsgemäßen Katalysators eine Porenstruktur mit Durchmessern von etwa 30 bis 100 nm (bestimmt mittels Rasterelektronenmikroskopie) und einer mit dem BET-Verfahren bestimmten Oberfläche im Bereich 2 bis 8 m²/g auf.

Die plastischen Eigenschaften der verwendeten Ausgangslegierung machen es in vorteilhafter Weise möglich, dass die Legierung auch zu einer dünnen bis sehr dünnen Folie ausgeformt und diese dünne bis sehr dünne Folie dann beispielsweise durch eines der oben beschriebenen Verfahren zumindest teilweise entlegiert werden kann.

Nach dem Entlegierungsverfahren steht dann eine poröse membranartige Struktur mit einer Dicke bis herab zu etwa 100 nm zur Verfügung, durch die ein Medium, beispielsweise ein Gas bzw. Gasgemisch oder eine Flüssigkeit, geleitet werden kann. Um möglichst große Umsätze bzw. Ausbeuten zu erzielen, kann der erfindungsgemäße Katalysator zum Beispiel in Form einer gehalterten oder nicht gehalterten membranartigen Struktur (Membrankatalysator) quer zur Strömungsrichtung eines Mediums eingebracht werden.

Wie die Erfinder herausgefunden haben, besitzt der erfindungsgemäße Katalysator beispielsweise eine ausgezeichnete Fähigkeit zur Oxidation von Kohlenmonoxid (CO) zu Kohlendioxid (CO₂) und dies bei Temperaturen eines Kohlenmonoxid-haltigen Mediums, beispielsweise eines Gases, Gasgemisches oder einer Flüssigkeit, bis herab zu etwa -50 °C. Die im Nachfolgenden beschriebenen Beispiele betreffen Versuche, bei denen diese Oxidation im Bereich von etwa -20 °C, über 0 °C und Raumtemperatur (+23 °C) bis hinauf zu +50 °C erfolgreich durchgeführt wurden. Selbstverständlich ist zu erwarten, dass diese Oxidationsreaktion auch bei noch höheren Temperaturen, beispielsweise bis hinauf zu etwa 150 °C, mit Hilfe des erfindungsgemäßen Katalysators beschleunigt wird. Insbesondere eine katalytisch vermittelte Oxidation bei niedrigen Temperaturen erscheint besonders interessant, da durch sie Energie und damit Kosten eingespart werden können.

Die Eigenschaft der effizienten Oxidation von Kohlenmonoxid zu Kohlendioxid macht den erfindungsgemäßen Katalysator beispielsweise auch für eine Anwendung in Brennstoffzellen interessant. Insbesondere bei Polymer-Elektrolyt-Membran-Brennstoffzellen (PEM) kann Kohlenmonoxid den Anodenkatalysator blockieren. Wenn nun ein erfindungsgemäßer Katalysator, z. B. in Form eines gehalterten oder nicht gehalterten Membrankatalysators, oder aber auch in Form einer konventionellen Katalysatorschüttung stromaufwärts in Bezug auf den Anodenkatalysator in dem Gasstrom angeordnet ist, kann nachteilig wirkendes Kohlenmonoxid durch diesen Katalysator jedenfalls zum größten Teil aus dem Gasstrom entfernt werden, bevor dieser zu dem Anodenkatalysator weitergeleitet wird.

Wie oben bereits erwähnt wurde, kann der erfindungsgemäße Katalysator auch in Form eines teilchenförmigen Katalysators, beispielsweise in Pulverform, hergestellt und dann etwa in Form einer Katalysatorschüttung oder als in einer Reaktionsmischung fein verteilter Katalysator verwendet werden.

Zur Herstellung des erfindungsgemäßen Katalysators in Teilchen- und Pulverform kann das Material nach dem Entlegierungsverfahren durch Anwendung eines geeigneten Verfahrens zerkleinert werden. Dies ist deshalb vergleichsweise einfach möglich, weil das Material nach der zumindest teilweisen Entlegierung eine deutlich höhere Sprödigkeit aufweist als die Ausgangslegierung.

Bei dem Zerkleinerungsprozess ist darauf zu achten, Druckbelastungen zu vermeiden oder so klein wie möglich zu halten, da eine zu hohe Druckbelastung durch Verdichtung bzw. Zerstörung der Poren nachteilig wirken würde.

Alternativ dazu kann erfindungsgemäß auch die Ausgangslegierung in kleinen Teilchen hergestellt werden, z. B. durch Eintropfen einer entsprechenden Schmelze in ein kühles bzw. kühlendes Medium. Gleichfalls ist es möglich, aus einer festen Ausgangslegierung kleine Teilchen durch mechanische Verarbeitung herzustellen. Die kleinen Teilchen der Ausgangslegierung können dann wie beschrieben zumindest teilweise entlegiert und zu einem erfindungsgemäßen Katalysator ausgebildet werden.

Die/Das so erhaltene(n) Katalysatorteilchen bzw. -pulver können/kann dann selbstverständlich beispielsweise wieder zu größeren Einheiten, wie beispielsweise Pellets geformt und als solche eingesetzt werden.

Die vorliegende Erfindung wird durch die nachfolgenden Ausführungen noch genauer beschrieben. Diese Ausführungen beziehen sich auf Versuche und Ergebnisse, die bei Verwendung des erfindungsgemäßen Katalysators zur Oxidation von Kohlenmonoxid zu Kohlendioxid durchgeführt bzw. ermittelt wurden. Die Oxidation von Kohlenmonoxid zu Kohlendioxid stellt jedoch lediglich eines der vielen möglichen Anwendungsgebiete für den erfindungsgemäßen Katalysator dar und ist insoweit lediglich als ein geeignetes Modellsystem zur Darlegung von Eigenschaften des erfindungsgemäßen Katalysators zu verstehen. Die Ausführungen dienen somit lediglich zur Veranschaulichung von Eigenschaften des erfindungsgemäßen Katalysators, dürfen jedoch nicht so verstanden werden, dass sie in irgendeiner Weise begrenzend für den Schutzbereich der nachfolgenden Ansprüche sind. Des Weiteren sind die Angaben in diesem Dokument zur Zusammensetzung des erfindungsgemäßen Katalysators so zu verstehen, dass in dem verwendeten Gold und dem mindestens einen weniger edlen Metall selbstverständlich die üblicherweise noch vorhandenen Verunreinigungen vorhanden sein dürfen.

In den beigefügten Zeichnungen zeigt
- Figur 1: Rasterelektronenbilder der erfindungsgemäßen porösen Struktur bei a) 1500-facher und b) 6000-facher Vergrößerung;
- Figur 2: ein XPS-Übersichtsspektrum eines erfindungsgemäßen Goldschaums;
- Figur 3: CO₂ Ausbeuten und Temperaturdifferenzen bei verschiedenen CO Konzentrationen bei +23 °C und einem Durchfluss von 13,3 mL/min;
- Figur 4: CO₂ Ausbeuten und Temperaturdifferenzen bei verschiedenen CO Konzentrationen bei +50 °C und einem Durchfluss von 12,8 mL/min;
- Figur 5: einen Vergleich der Ausbeuten bei +50 °C und +23 °C;
- Figur 6: CO₂ Ausbeuten und Temperaturdifferenzen bei verschiedenen CO Konzentrationen bei 0 °C;
- Figur 7:: CO₂ Ausbeuten und Temperaturdifferenzen bei verschiedenen CO Konzentrationen bei -20 °C;
- Figur 8:: Langzeitstabilität eines erfindungsgemäßen Katalysators

### 1. Darstellung von beispielhaften Goldschäumen

Zunächst wurde eine Au-Ag-Ausgangslegierung mit 30 Atom% Au hergestellt. Beim vorliegenden Beispiel wurde die fertige Ausgangslegierung in Scheiben zersägt. Die Dicke der Scheiben ist nicht beschränkt und kann, wie im vorliegenden Beispiel geschehen, beispielsweise 1 bis 5 mm betragen. Die Scheiben wurden anschließend auf eine gewünschte Dicke gerollt. Für die Dicke besteht ebenfalls keine besondere Einschränkung. Im vorliegenden Beispiel wurden die Scheiben auf eine Dicke von etwa 100 bis 300 µm gerollt. Aus den so geformten Ausgangslegierungen können anschließend gewünschte Formen herausgestanzt werden. Im vorliegenden Beispiel waren dies Scheiben mit einem Durchmesser von etwa 5 bis 10 mm.

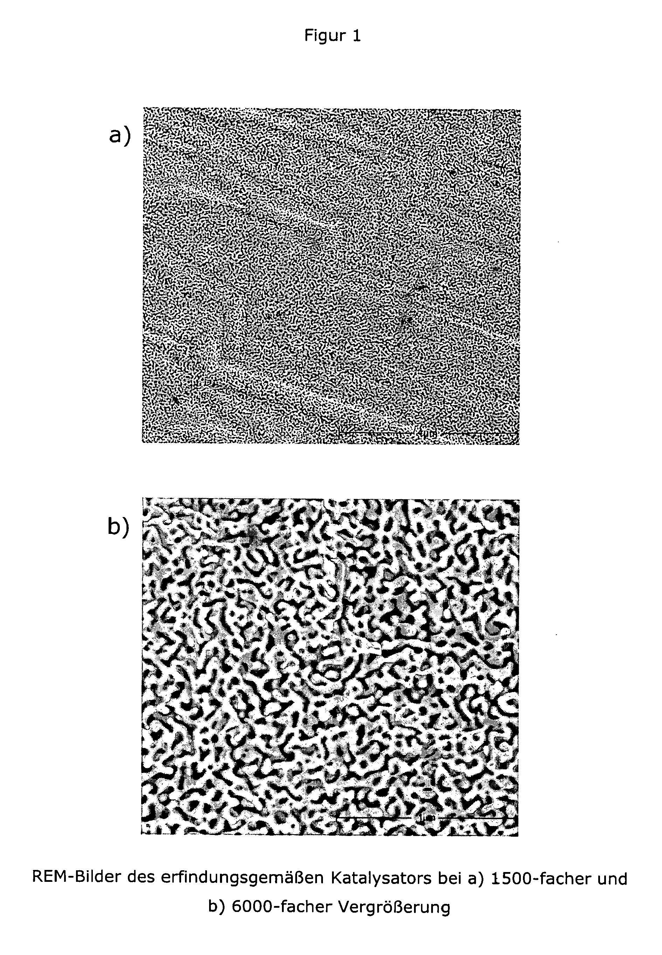

Anschließend wurden die Proben für 24 Stunden bei 850 °C ausgeglüht. Zum teilweisen Entlegieren und Erzeugen der Schaumstruktur wurde die Probe nasschemisch behandelt. Die nasschemische Teilentlegierung wurde in einer Lösung von 70 %-iger Salpetersäure durchgeführt. Die Proben wurden auf einem porösen Glasteller in ein Becherglas gegeben. Dann wurde die Säure hinzugefügt, so dass die Probe bedeckt war. Etwa 300µm dicke Proben wurden auf diese Weise innerhalb von ein bis drei Tagen entlegiert. Durch die Salpetersäure wurde der größte Teil des Silberanteils selektiv aus den Proben herausgelöst und zurück blieben nanoporöse Goldschäume. Die Säure wurde mit Hilfe einer Spritze entfernt und durch Wasser ersetzt. Dieses wurde mehrfach ausgetauscht, um die Proben von verbleibenden Säureresten zu reinigen. Die Proben wurden anschließend luftgetrocknet. Die Proben besitzen die in Figur 1 wiedergegebene Schaumstruktur.

### 2. Oberflächenanalytische Untersuchung mittels XPS

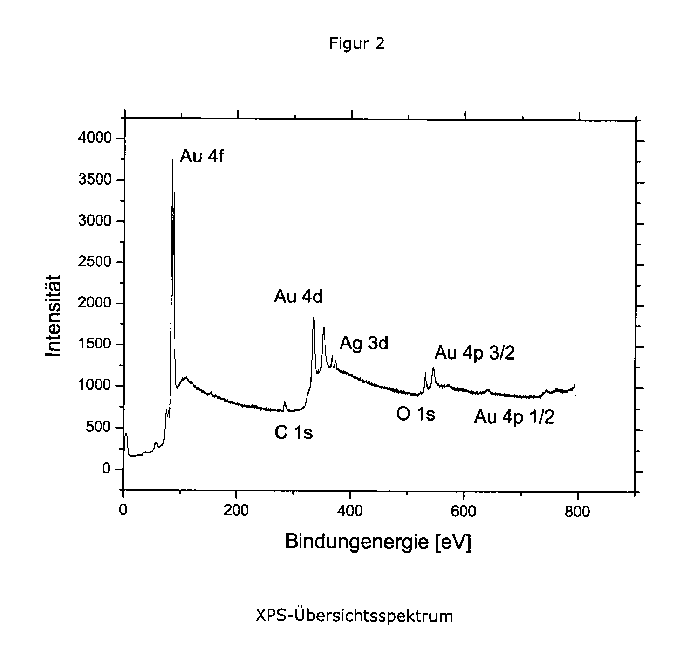

XPS-Analysen wurden in einer UHV-Apparatur der Firma Omicron durchgeführt. Die Proben wurden dabei auf ein Probenplättchen aufgebracht und in die Apparatur eingeschleust. Bei der verwendeten Röntgenquelle handelte es sich um eine Magnesiumanode der Firma Omicron. Die Detektion erfolgte über ein Energiespektrometer EA 10+ der Firma SPECS/Leybold. Die Energie der Photonen betrug bei diesen Messungen 1253,6 eV. Bei allen Messungen, außer bei dem in Figur 2 wiedergegebenen Übersichtsspektrum, betrug die Passenergie 25 eV. Beim Übersichtsspektrum betrug sie 100 eV.

### 3. Zusammensetzung eines beispielhaften Katalysators

Um die Zusammensetzung zu bestimmen, wurden einerseits Messungen mit Hilfe der Atom-Absorptions-Spektroskopie (AAS, Fa. Zeiss) durchgeführt. Hierfür wurden die Proben in Königswasser aufgelöst und anschließend auf ihren Silber- und Goldgehalt hin untersucht. Andererseits wurde die Oberflächenzusammensetzung mit Hilfe der Röntgenphotoelektronenspektroskopie (XPS) ermittelt. Dieses Verfahren ist oberflächensensitiv und erfasst lediglich die obersten Atomlagen des Materials. Ein beispielhaftes XPS-Übersichtsspektrum ist in Figur 2 dargestellt.

Aus dem in Figur 2 wiedergegebenen Spektrum lässt sich die Aussage herleiten, dass das Gold in metallischer und nicht in ionischer Form vorliegt. Die Peaks bei 87,75 eV und 84,1 eV sind dem 4f-Zustand des metallischen Goldes zuzuordnen, welcher laut Literatur bei 87,45 eV und 83,8 eV liegen soll [L.E. Davis, G.E. Muilenberg, C.D. Wagner, W.M. Riggs; Handbook X-Ray Photoelectron Spectroscopy, Perkin-Elmer Corporation 1978].

Es können in dem Spektrum noch zwei weitere Peaks bei 373,05 eV und 367,06 eV identifiziert werden. Diese zwei Peaks können dem 3d-Zustand des metallischen Silbers zugeordnet werden. Über die integralen Intensitäten der Gold- und Silberpeaks kann - unter Berücksichtigung der unterschiedlichen Wirkungsquerschnitte - die Oberflächenzusammensetzung quantitativ ermittelt werden.

Anhand der Verhältnisse der integralen Signalintensitäten von Silber und Gold wurde ein Silbergehalt von ca. 4-5 Atom% ermittelt. Hierbei wurde davon ausgegangen, dass das Silber homogen in den mit der Methode erfassten oberflächennahen Bereichen verteilt vorliegt. Mittels AAS hingegen wurde ein Restsilbergehalt der Gesamtprobe von ca. 0,5 bis 1 Atom% ermittelt. Dies weist auf eine Anreicherung des Silbers an der Oberfläche hin.

### 4. Reaktoraufbau für die Messungen der Kohlenmonoxid-Oxidation

Der Reaktor besteht aus einem Glaszylinder mit einer Fritte (Durchmesser 2 cm), auf der die Probe (Durchmesser 5 mm) liegt. Die Gaszuleitung erfolgt über ein Glasrohr, welches den Zylinder spiralförmig zur Temperierung des Gases umgibt. (Man beachte, dass durch den geschilderten Reaktoraufbau je nach Durchströmungsbedingungen nicht immer alle Gasmoleküle mit der Probe wechselwirken können.) Der Gasdurchfluss wird über zwei Durchflussmassenregler der Firma Brockhorst geregelt. Die Regler haben einen maximalen Durchfluss von 50 mL/min synthetischer Luft und von 5,6 mL/min Kohlenmonoxid. Die Abweichungen der Massendurchflussregler von dem eingestellten Durchfluss beträgt ±2%. Die Kalibrierung der Massendurchflussregler erfolgte durch die Blasenzählermethode.

Die Temperaturregelung erfolgt indirekt über ein Siliconbad, in welchem sich der Reaktor befindet und das über einen Thermostaten der Firma Haak von -20 °C bis +200 °C temperiert werden kann. Im Innenraum des Reaktors befindet sich ein Nickel/Chrom-Nickel- und ein Nickel/Chrom-Nickel-Nickel/Chrom-Thermoelement. Über das Ni/Cr-Ni-Element wird die Reaktortemperatur gemessen, während das Ni/Cr-Ni-Ni/Cr-Element so angeordnet ist, dass ein Knoten die Probe kontaktiert und der andere über ihr hängt. Durch diese Anordnung ist es möglich, die Temperaturdifferenz zwischen Probe und Reaktor zu messen. Der Fehler eines solchen Thermoelementes beträgt 1 % der gemessenen Temperaturdifferenz.

An dem Gasauslass des Reaktors ist ein CO₂ Uras 3G der Firma Hartmann und Braun angeschlossen, mit welchem die Menge an Kohlendioxid im Volumen gemessen wird. Die Kohlendioxid-Konzentration im Volumen und die Temperaturdifferenz werden als Spannungssignal ausgegeben und von einem Schreiber LS-52-2 der Firma Linseis aufgezeichnet. Die Eichung des Uras 3G erfolgte, indem verschiedene Konzentrationen von Kohlendioxid in synthetischer Luft eingestellt wurden und diese dann mittels des Uras 3G detektiert wurden. Der maximale Arbeitsbereich des Gerätes beträgt 8 Volumenprozent Kohlendioxid bei einem gerätetechnischen Fehler von 0,05 %.

### 5. Katalyse mit Hilfe eines beispielhaften Katalysators bei +23 °C

Die nachfolgenden Ausführungen beziehen sich exemplarisch auf einen erfindungsgemäßen Katalysator in Form eines Goldschaums, der aus einer Au-Ag-Ausgangslegierung (30 Atom% Au) nasschemisch hergestellt wurde. Dieses Material wies eine mittels Rasterelektronenmikroskopie bestimmte Porenstruktur mit Durchmessern von ca. 50 nm auf. Die mit dem BET-Verfahren bestimmte Oberfläche betrug ca. 4 m²/g. Der Restsilbergehalt betrug im gesamten Material des Katalysators, wie beschrieben, wenige Atomprozente (0,5-2%), wobei Silber an der Oberfläche angereichert war (4-20 Atom%).

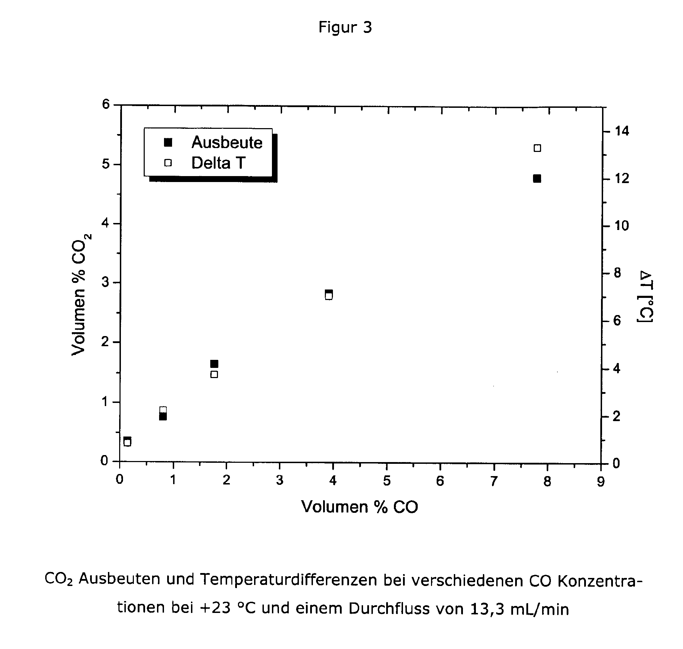

Nach einer einmaligen Aktivierung des Katalysators bei +50 °C in einem Gasstrom von 50 ml/min synthetischer Luft, die 4 Volumen% Kohlenmonoxid enthielt, konnte die Umsetzung des Kohlenmonoxids bei Raumtemperatur verfolgt werden. Hierzu wurde der Testreaktor, in dem die Probe auf einer Keramikfritte liegend dem Gasstrom ausgesetzt wurde, mit 13 ml/min synthetischer Luft durchströmt. Kohlenmonoxid wurde in verschiedenen Konzentrationen dem Gasstrom beigemischt. Hierbei ließen sich im Bereich von 0,14 bis 7,8 Volumen% stetig steigende Kohlendioxid-Ausbeuten beobachten. Die Detektion der Produktgase erfolgte über einen Kohlendioxid-spezifischen Gasdetektor (Uras 3G der Firma Hartmann & Braun). Zusätzlich konnte über Thermoelemente die Temperaturdifferenz (ΔT) zwischen Reaktor und Katalysatorprobe ermittelt werden. Da es sich bei der untersuchten Reaktion (CO + ½O₂ --> CO₂) um eine exotherme Reaktion handelt, ließ sich der Umsatz über eine erhöhte Temperatur der Probe gegenüber dem Reaktor nachweisen. Figur 3 zeigt sowohl die Kohlendioxid-Ausbeuten in Volumen% als auch die positiven Temperaturdifferenzen. Beide Ergebnisse zeigen deutlich die Oxidation von Kohlenmonoxid mit Hilfe des eingesetzten Katalysators. Die bei den Versuchen verwendete Temperatur betrug +23 °C.

### 6. Katalyse mit Hilfe eines beispielhaften Katalysators bei +50 °C

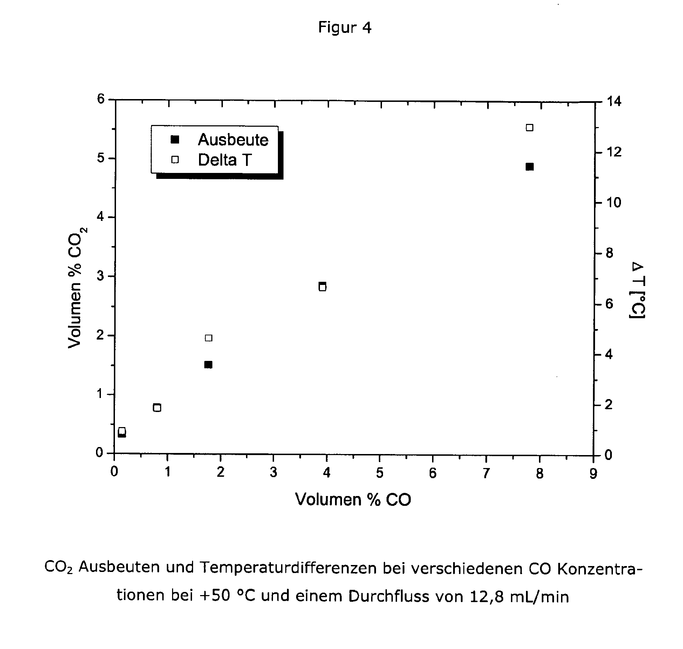

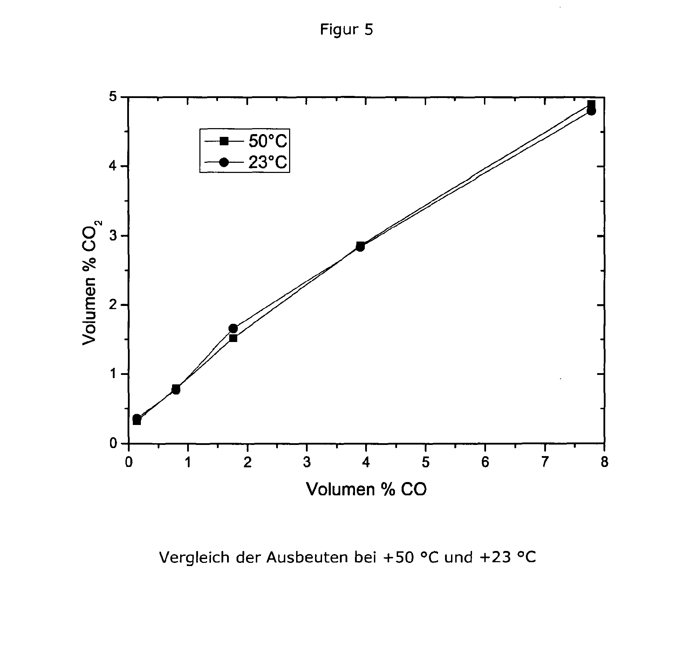

Wenn man die gleichen Versuche, die oben unter 5. beschrieben wurden, bei einer Temperatur von +50 °C durchführt, erhält man Ergebnisse, die denen der Versuche bei +23 °C sehr ähnlich sind, wie aus Figur 4 ersichtlich ist. Wieder steigt die Ausbeute von Kohlendioxid mit zunehmender Kohlenmonoxid-Konzentration nahezu linear an und die Temperaturdifferenzen korrelieren mit den Ausbeuten. In Figur 5 sind die Ausbeuten der Messungen bei +23 °C und +50 °C in einem Graphen dargestellt.

### 7. Katalyse mit Hilfe eines beispielhaften Katalysators bei 0 °C

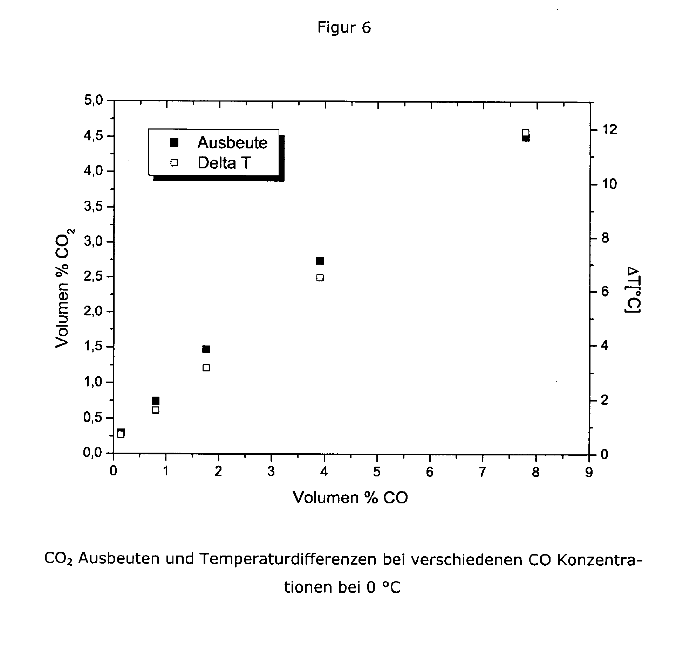

Bei Messungen bei 0 °C wird das gleiche Verhalten des erfindungsgemäßen Katalysators beobachtet, wie bei Messungen bei höheren Temperaturen. Wie in Figur 6 dargestellt ist, wurde sowohl die höchste Ausbeute von 4,5 Volumen% Kohlendioxid bei der höchsten Konzentration von Kohlenmonoxid, als auch die niedrigste Ausbeute von 0,3 Volumen% Kohlendioxid bei der niedrigsten Kohlenmonoxid-Konzentration gemessen.

### 8. Katalyse mit Hilfe eines beispielhaften Katalysators bei -20 °C

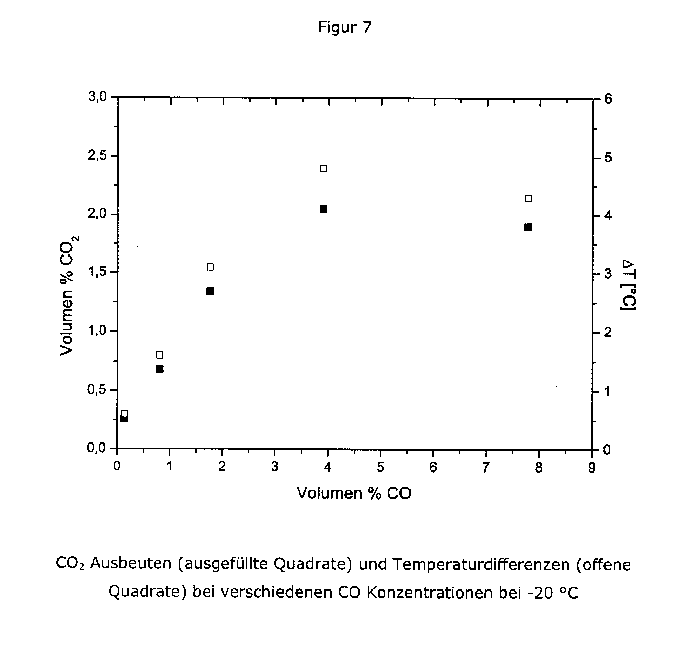

Die Kohlendioxid-Ausbeuten bei -20 °C sind geringer als alle bei höheren Temperaturen gemessenen, wie in Figur 7 dargestellt ist. Dass bei einer solch niedrigen Temperatur jedoch überhaupt ein solch hoher Umsatz erreicht wird, ist unerwartet und überraschend und ein deutlicher Beweis für die Qualitäten des erfindungsgemäßen Katalysators.

Werden die Ausbeuten der Messung bei -20 °C betrachtet, so zeigen diese nicht mehr den typischen Kurvenverlauf, der bei allen vorherigen Messungen beobachtet wurde. Im Gegensatz zu den Messungen bei höheren Temperaturen ist der Anstieg nicht mehr linear. War bei den Messungen bei höheren Temperaturen mit steigender Kohlenmonoxid-Konzentration stets eine Erhöhung der Ausbeute an gebildetem Kohlendioxid gemessen worden, so scheint dies oberhalb von 4 Volumen% Kohlenmonoxid bei -20 °C nicht mehr der Fall zu sein.

Wie es scheint, ist bei einer niedrigen Temperatur wie -20 °C nicht die Konzentration von Kohlenmonoxid entscheidend für die Reaktionsgeschwindigkeit sondern es wirkt ein anderer Faktor limitierend.

Ohne sich auf eine bestimmte Erklärung festlegen zu wollen, könnte es sein, dass sich die Dissoziation des molekularen Sauerstoffs unter diesen Bedingungen als geschwindigkeitsbestimmend auf die Kinetik der Reaktion auswirkt.

### 9. Langzeitstabilität

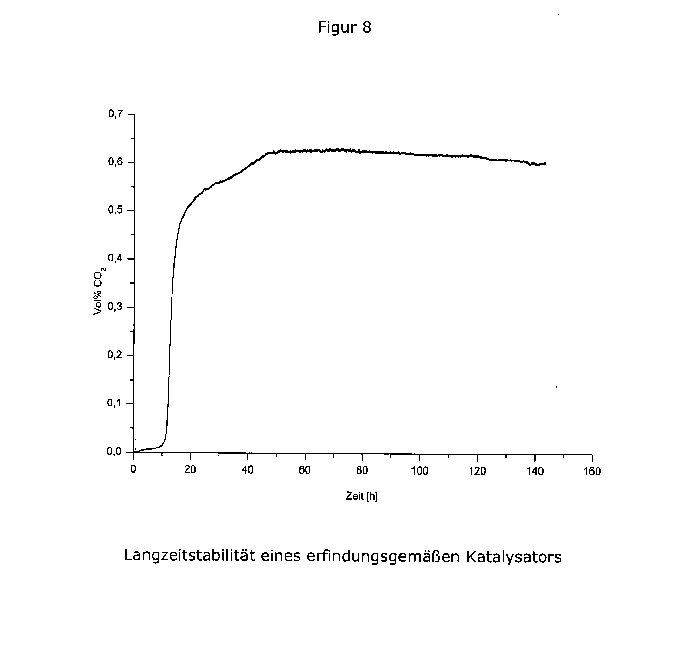

Eine Probe mit einer Masse 29,1 mg und einem Restsilbergehalt von 0,5 Atom% im Volumen und ca. 16 Atom% an der Oberfläche wurde zunächst bei Raumtemperatur (ca. +20°C) in den Reaktor gegeben und mit synthetischer Luft gespült. Nach einigen Minuten wurden dem Gas 4 Volumen% Kohlenmonoxid (CO) hinzugemischt. Der Gesamt-Volumenstrom der Gase betrug 50 mL/min. Unter diesen Bedingungen war der Katalysator wie erwartet inaktiv. Nach einer Erhöhung der Temperatur auf +50°C setzte die Aktivität der Probe sofort ein und stieg in den folgenden Stunden sogar noch an. Die Temperatur von +50 °C wurde während des weiteren Verlaufs des Experiments beibehalten. Der Verlauf der Aktivität ist in Figur 8 dargestellt.

In dieser Figur 8 ist die Aktivität der Probe als Funktion der Zeit dargestellt. Hierbei muss allerdings bedacht werden, dass es sich bei dem hier verwendeten Katalysator (in einem Reaktor im Labormaßstab) um eine sehr kleine Probe mit einer Masse von nur etwa 29 mg gehandelt hat. Es muss daher davon ausgegangen werden, dass ein großer Teil des Reaktionsgases an der Katalysatoroberfläche vorbeiströmte und nicht an der Reaktion teilnehmen konnte. Die hier dargestellten Werte sind somit als relative und nicht absolute Einheiten zu betrachten.

Durch die Erfindung wird ein neuer goldhaltiger Katalysator mit poröser Struktur bereitgestellt, der sich bei einem vergleichsweise einfachen Verfahren zu seiner Herstellung durch einer hervorragende Eignung zur katalytischen Beschleunigung und/oder katalytischen Beeinflussung der Produktselektivität von Oxidations- und Reduktionsreaktionen auszeichnet und dabei trotz nicht vorhandenem Trägermaterial eine ausreichende bis hervorragende Langzeitstabilität aufweist. Diese Eigenschaften machen den erfindungsgemäßen Katalysator beispielsweise besonders geeignet zum Oxidieren und damit Entfernen von Kohlenmonoxid aus einem Medium, wie beispielsweise einem Gas, Gasgemisch oder einer Flüssigkeit.

## Patentansprüche

1. Goldhaltiger Katalysator mit poröser Struktur, **dadurch gekennzeichnet, dass** er erhältlich ist durch ein Verfahren, das die folgenden Schritte umfasst:
Herstellen einer Ausgangslegierung durch gemeinsames Schmelzen von Gold und wenigstens einem weniger edlen Metall, das ausgewählt ist aus der Gruppe bestehend aus Silber, Kupfer, Rhodium, Palladium und Platin; und
zumindest teilweises Herauslösen des mindestens einen weniger edlen Metalls aus der so erhaltenen Ausgangslegierung (Entlegierungsverfahren).

2. Katalysator nach Anspruch 1, **dadurch gekennzeichnet, dass** das Herstellen der Ausgangslegierung durch gemeinsames Schmelzen von Gold und wenigstens einem weniger edlen Metall erfolgt, das ausgewählt ist aus der Gruppe bestehend aus Silber, Kupfer und Palladium.

3. Katalysator nach einem der Ansprüche 1 oder 2, **dadurch gekennzeichnet, dass** das Herstellen der Ausgangslegierung durch gemeinsames Schmelzen von Gold und einem der weniger edlen Metalle erfolgt.

4. Katalysator nach einem der Ansprüche 1 bis 3, **dadurch gekennzeichnet, dass** das Verhältnis von Gold zu dem/den weniger edlen Metall(en) in der Ausgangslegierung im Bereich von etwa 50 Atom% : 50 Atom% bis 10 Atom% : 90 Atom% liegt.

5. Katalysator nach einem der Ansprüche 1 bis 4, **dadurch gekennzeichnet, dass** bei einer Au-Ag-Ausgangslegierung das Verhältnis von Gold zu Silber in der Ausgangslegierung im Bereich von etwa 45 Atom% : 55 Atom% bis 20 Atom% : 80 Atom% liegt.

6. Katalysator nach einem der vorhergehenden Ansprüche, **dadurch gekennzeichnet, dass** das Verfahren weiter einen Schritt des Homogenisierens umfasst, bei dem die Ausgangslegierung eine ausreichende Zeit bei einer Temperatur nahe unterhalb des Schmelzpunktes gehalten wird.

7. Katalysator nach einem der vorhergehenden Ansprüche, **dadurch gekennzeichnet, dass** das Verfahren weiter wenigstens einen Formgebungsschritt umfasst, mit dem der Ausgangslegierung eine gewünschte Form gegeben wird.

8. Katalysator nach Anspruch 7, **dadurch gekennzeichnet, dass** zur Formgebung der Ausgangslegierung wenigstens eines der Verfahren des Pressens, Stanzens, Walzens, Biegens, Bohrens, (Aus)Hämmerns, Schneidens und Fräsens angewandt wird.

9. Katalysator nach einem der Ansprüche 7 oder 8, **dadurch gekennzeichnet, dass** das Verfahren nach dem wenigstens einen Formgebungsschritt weiter einen Schritt des Ausglühens der geformten Ausgangslegierung umfasst.

10. Katalysator nach einem der vorhergehenden Ansprüche, **dadurch gekennzeichnet, dass** das Entlegierungsverfahren und das Erzeugen der porösen Struktur unter Verwendung wenigstens eines nasschemischen und/oder eines elektrochemischen Verfahrens erfolgt.

11. Katalysator nach einem der vorhergehenden Ansprüche, **dadurch gekennzeichnet, dass** nach der zumindest teilweisen Entlegierung das Verhältnis von Gold zu dem wenigstens einen weniger edlen Metall in der porösen Struktur im Bereich von 100 Atom% : 0 Atom% bis 95 Atom% : 5 Atom%, bestimmt mittels AAS, liegt.

12. Katalysator nach einem der vorhergehenden Ansprüche, **dadurch gekennzeichnet, dass** das Verfahren weiter einen Schritt der Aktivierung des nach der zumindest teilweisen Entlegierung erhaltenen Materials bei einer Temperatur von etwa +40 °C bis +80 °C in einer sauerstoffhaltigen Atmosphäre, gegebenenfalls in Anwesenheit von Kohlenmonoxid, umfasst.

13. Katalysator nach einem der vorhergehenden Ansprüche, **dadurch gekennzeichnet, dass** er eine Porenstruktur mit mittels Rasterelektronenmikroskopie bestimmten Durchmessern von etwa 30 bis 100 nm und eine mit dem BET-Verfahren bestimmte Oberfläche im Bereich von etwa 2 bis 8 m²/g aufweist.

14. Katalysator nach einem der vorhergehenden Ansprüche in Form eines Pulvers, von Pellets oder einer membranartigen Struktur, wobei die membranartige Struktur eine Dicke bis herab zu etwa 100 nm aufweist.

15. Verwendung eines Katalysators nach einem der Ansprüche 1 bis 14 zur Beschleunigung und/oder Beeinflussung der Produktselektivität von Oxidations- und Reduktionsreaktionen.

16. Verwendung nach Anspruch 15 zur Oxidation von in einem Medium enthaltenem Kohlenmonoxid zu Kohlendioxid.

17. Verwendung nach Anspruch 16, wobei die Temperatur des Kohlenmonoxid-haltigen Mediums im Bereich von etwa -50 °C bis +150 °C beträgt.

18. Brennstoffzelle, **dadurch gekennzeichnet, dass** sie einen Katalysator nach einem der Ansprüche 1 bis 14 enthält.

19. Brennstoffzelle nach Anspruch 18, **dadurch gekennzeichnet, dass** sie eine Polymer-Elektrolyt-Membran-Brennstoffzelle, bevorzugt eine Niedertemperatur-Polymer-Elektrolyt-Membran-Brennstoffzelle ist.

20. Brennstoffzelle nach Anspruch 18 oder 19, **dadurch gekennzeichnet, dass** der Katalysator ein gehalterter oder nicht gehalterter Membrankatalysator oder eine Katalysatorschüttung ist, der/die im Gasstrom stromaufwärts in Bezug auf den Anodenkatalysator angeordnet ist.
